# EUROPEAN PATENT SPECIFICATION

(11) **EP 2 547 579 B1**
(45) Date of publication and mention of the grant of the patent: **24.06.2015**
(21) Application number: 11755781.9
(22) Date of filing: 18.03.2011
(51) Int. Cl.: B62M 6/40, B62M 6/80, B62J 99/00, B60R 13/10, B62M 23/02, B62M 6/45, B60L 3/08

(54) **VEHICLE, VEHICLE REGISTRATION PLATE AND METHOD FOR OPERATING A VEHICLE**
FAHRZEUG, FAHRZEUGREGISTRIERUNGSPLAKETTE UND BETRIEBSVERFAHREN FÜR DAS FAHRZEUG
VEHICULE, PLAQUE D'IMMATRICULATION DE VEHICULE ET PROCEDE DE FONCTIONNEMENT DE VEHICULE

(30) Priority: 18.03.2010 DE 102010016009
(43) Date of publication of application: 23.01.2013
(60) Divisional application: 15167710.1
(73) Proprietor: TQ-Systems GmbH, 82229 Seefeld (DE)
(72) Inventor: JÄKEL, Jürgen, 82024 Taufkirchen (DE)
(74) Representative: Schweiger, Martin
(86) International application number: PCT/IB2011/051149
(87) International publication number: WO 2011/114316

(56) References cited:
- GB-A- 2 453 598
- JP-A- 11 227 667
- JP-A- 2004 345 400
- US-A- 5 826 675
- US-B1- 6 446 745

## Description

The application relates to a vehicle with a drive train having an electrical motor, e.g. a bicycle with an electrical drive or with an electrical auxiliary drive. It also relates to a vehicle registration plate for such a vehicle as well as to a method for operating such a vehicle.

The DE 20 2005 006 684 Ul shows an electrical vehicle with an auxiliary motor which supports a rider of the vehicle. The support by the motor is limited to a maximum speed of the vehicle and to the acceleration phase when starting to ride the vehicle. To comply with statutory provisions, the maximum speed for a support by the auxiliary motor is currently 25 km/h in many countries.

The US 5 826 675 which is considered the closest prior art to claim 1, discloses an electric motor assisted vehicle, wherein a vehicle power unit has a controller with identifying data. The controller is not operative to provide electric power assist unless utilized with a security unit that has matching data.

The GB 2 453 598 discloses a registration plate with a transponder and a vehicle to which the registration plate body is fitted with a transponder.

The application provides a vehicle with a broad intended use and a high flexibility for the user. The application further provides a vehicle registration plate for such a vehicle as well as a method for operating such a vehicle.

The object of the present specification is disclosed in the subject matter of the independent claims. Further developments are disclosed by the subject matter of the dependent claims.

A vehicle comprises a drive with an electrical motor, whereby the drive comprises at least two operational modes. An operation parameter of the drive is limited to a first target area in a first operational mode and to a second target area in the second operational mode. The drive is only operable in the second operational mode if written information of a tag at or on the vehicle is visible. The drive is operable in the first operational mode, if written information of the tag is invisible.

The tag comprises a vehicle registration plate; the tag comprises a written information which represents a maximum allowed speed of the vehicle.

The switching between different operational modes of the vehicle may easily be done without the help of tools, thereby excluding misuse or at least sufficiently impeding misuse. Switching from an operational mode, in which the vehicle does not need a tag to be visible, to an operational mode, in which the tag or the written information on the tag is visible, is done by installing the tag, which in turn activates the operational mode. On the other side, the operational mode cannot be operated without installing the tag or at least without written information on the tag being visible. Switching from a vehicle with an obligation for a certificate to a vehicle without such an obligation is made easy. Thus, the vehicle provides a high flexibility for the user and it is made sure that it complies with the statutory provisions.

Electrical bicycles, so called e-bikes, get more and more popular. The motor of e-bikes is controlled independently of the pedalling power provided by a user. The power of the motor is controlled by a manual control element, for example a turning handle comparable to that of a moped. In Germany, e-bikes have stricter statutory provisions than pedelecs. E-bikes have a maximum speed of 45 km/h, have to comprise a vehicle registration plate and require an inspection document for a motor-assisted bicycle. The application provides an e-bike that can be converted into an electrical bicycle, for which no certificate is obligatory.

Pedelec and e-bikes each are convenient only for specific intended use. A pedelec can be used as a bicycle in a forestall or in a pedestrian area, whereas an e-bike provides a faster transportation on streets due to its higher speed and, accordingly, provides more driving pleasure.

A vehicle providing enhanced flexibility unifies characteristics of a pedelec and of an e-bike in one single vehicle. On one hand, it can support the rider with an auxiliary motor in areas in which the use of an e-bike or a moped is not allowed. On the other hand, it provides, after switching, a fast transportation means, even if a user does not pedal. Ideally, the vehicle should provide a pedelec function as well as an e-bike function. The operation of a vehicle as e-bike requires the provision of a tag such as a vehicle registration plate. Technical means provide that the vehicle is not accidentally or improperly used without a vehicle registration plate.

The vehicle registration plate comprises a key unit that interacts with a motor control device of the vehicle to activate the second operational mode.

In a further embodiment, a key is integrated in a vehicle registration plate to activate an e-bike operational mode that may be the second operational mode. Thugs, it is ensured that the vehicle comprises a vehicle registration plate according to the official regulations if it is used as an e-bike. Preferably, for activating the second operational mode, the vehicle registration plate is provided such that an electrical connection is provided at the same time when the vehicle registration plate is installed according to the official regulations.

In an embodiment, the key unit comprises a chip, such as an EEPROM (erasable programmable read-only memory) or another non-volatile memory, being readable by a controller. The chip may carry an written information for identifying the vehicle, such as the number of the chassis frame or a serial number, to ensure a secure assignment of the vehicle registration plate to the vehicle.

The key unit may further comprise an additional control device that activates the second operational mode. In this embodiment, the additional control unit triggers the second operational mode during and after installing the vehicle registration plate and it activates the power electronic circuitry of the electrical motor to provide additional power.

In a further embodiment, the key unit comprises a coding unit. The coding unit modifies control signals of the motor control device. The power electronic circuitry of the electrical motor may activate the additional power only by this code. The modification may be a simple amplification of the control signals.

The key unit may comprise a bridge that provides an electrical contact between a conductor to the motor control device and a conductor to the power electronic circuitry of an electrical motor. Such a key unit is especially convenient if the drive comprises more than one electrical motor, whereby in the first operational mode only the first electrical motor is operational. The second electrical motor or further electrical motors are activated with the help of a key unit that triggers in the second operational mode or in further operational modes.

In an embodiment, the nominal continuous power of the drive in a first operational mode is restricted to a first maximum value and it is restricted to the second maximum value in the second operational mode, whereby the second maximum value is larger than the first maximum value.

In this embodiment, it is possible to operate the vehicle in a first operational mode as a pedelec with a nominal continuous power of 250 W at speeds of up to 25 km/h and in the second operational mode with a nominal continuous power of 4 kW.

Alternatively or additionally, a second operation parameter of the vehicle may be limited, for example the vehicle speed. In an embodiment, the speed of the vehicle in the first operational mode is limited to a first maximum value and in the second operational mode to a second maximum value, whereby the second maximum value is larger than the first maximum value.

According to an embodiment, the drive comprises at least two electrical motors, of which the first one is operable in the first operational mode, whereby in the second operational mode the second electrical motor is operable stand-alone or both the first and the second electrical motors are operable.

The drive may comprise more than two operational modes, whereby the operation in more than one operational mode may depend on the presence of the vehicle registration plate or further keys.

The vehicle may comprise an operating device like a pedal for driving the vehicle by a user. The vehicle may be two-wheeler, a three-wheeler or a four-wheeler.

A vehicle registration plate comprises a key unit and a contact for an electrical connection to the vehicle. A drive unit of the vehicle comprises at least two different operational modes. An operation parameter of the drive is limited to a first target area in a first operational mode and to a second target area in a second operational mode, whereby the drive is only operable in the second operational mode, if the key unit is connected to the vehicle.

A possibly required power supply of the vehicle registration plate may be provided by an electrical connection to the vehicle as well as by a storage like an accumulator being integrated into the vehicle registration plate.

The key unit of the registration plate may especially comprise an electronic key unit that interacts with a motor control device of the vehicle to activate an operational mode for the drive of the vehicle.

In an embodiment, the key unit comprises a chip, such as an EEPROM or another non-volatile memory, being readable by a motor control device of the vehicle.

In a further embodiment, the key unit comprises an additional control device that activates an operational mode of an electrical motor of the vehicle.

In a further embodiment the key unit comprises a coding unit.

In a further embodiment, the key unit comprises a bridge that provides an electrical connection between a connector from a motor control device of the vehicle and a connector to the power electronic circuitry of the electrical motor of the vehicle.

According to a further aspect, a method is provided for operating a vehicle with a drive comprising at least one electrical motor, whereby the drive comprises at least two different operational modes. An operation parameter of the drive is limited to a first target area in a first operational mode and to a second target area in a second operational mode. The second operational mode is only activated, that means that the vehicle can operate in the second operational mode, if a written information on a tag of the vehicle is visible. The drive is operable in the first operational mode, if written information of the tag is invisible.

In one embodiment, the tag comprises a vehicle registration plate; in another embodiment, the tag comprises written information for a maximum allowed speed of the vehicle.

In a further embodiment, the vehicle can operate only in the second operational mode if the vehicle registration plate is connected to the vehicle.

According to an embodiment, the motor control device of the vehicle reads data from a chip, for example an EEPROM or another non-volatile memory, which is integrated in the key unit of the vehicle registration plate for checking if the vehicle registration plate is connected to the vehicle.

According to a further embodiment, a further control device, being integrated in a key unit of the vehicle registration plate activates the second operational mode.

According to a further embodiment, a coding unit being integrated in a key unit of the vehicle registration plate modifies control signals from a motor control device of the vehicle and the accordingly modified control signals activate the second operational mode.

According to a further embodiment, a bridge being integrated in a key unit of the vehicle registration plate provides an electrical contact between a conductor from a motor control device of the vehicle and a conductor to the power electronic circuitry of the electrical motor of the vehicle and thereby it activates the second operational mode.

The drive may comprise at least two electrical motors of which only the first one is operable in the first operational mode, whereby in the second operational mode, the second electrical motor is operated stand-alone or both the first and the second electrical motors are operated concurrently.

Embodiments of the invention will be explained with reference to the attached figures.
Figure 1 shows a schematic view of a vehicle according to an embodiment;
Figure 2 shows a schematic circuit diagram of a drive unit according to the first embodiment;
Figure 3 shows a schematic circuit diagram of a drive unit according to a second embodiment;
Figure 4 shows a schematic circuit diagram of a drive unit according to a third embodiment;
Figure 5 shows a schematic circuit diagram of a drive unit according to fourth embodiment;
Figure 6 shows an embodiment of a vehicle registration plate;
Figure 7 shows a cross section of the vehicle registration plate of Figure 6 in a first operational mode;
Figure 8 shows a cross section of the vehicle registration plate of Figure 6 in a second operational mode;
Figure 9 shows a further embodiment of a vehicle registration plate;
Figure 10 shows a further embodiment of a vehicle registration plate;
Figure 11 shows a further embodiment of a vehicle registration plate; and
Figure 12 shows a further embodiment of a vehicle registration plate.

Parts with same or similar functions in the figures are provided with the same reference numbers.

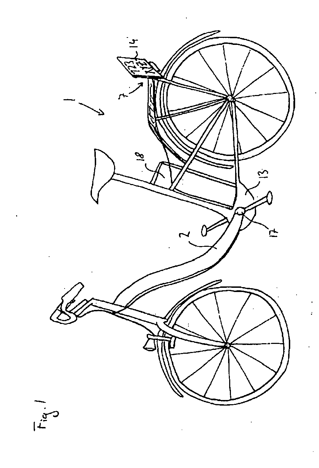

Figure 1 shows a two-wheeler vehicle 1 according to an embodiment of the application.

The vehicle 1 comprises an electrical auxiliary drive with a drive unit 13 being mounted on a frame 2.

The drive unit 13 comprises an electrical motor, not shown in figure 1, being integrated in the frame 2 in the area of the bottom bracket 17. The electrical motor comprises two operational modes. The drive unit 13 further comprises an accumulator 18 for supplying power to the electrical motor 12.

In a first operational mode of the electrical motor, the vehicle 1 is operating as a pedelec and the electrical motor provides support depending on the pedalling power provided by the rider. In this first operational mode, the nominal continuous power of the electrical motors is unlimited at a speed between 0 and 6 km/h and equals 250 W at a speed between 6 und 25 km/h. At speeds exceeding 25 km/h, the electrical motor does not support the rider.

In its second operational mode, vehicle 1 is operated as an e-bike with a nominal continuous power of the electrical motor of 4 kW.

The drive unit 13 can only be used in the second operational mode if the second operational mode is explicitly activated. For that purpose, the vehicle 1 comprises a vehicle registration plate 14 with an interface 7 to the vehicle 1, whereby the interface 7 comprises an electrical plug connection. The vehicle registration plate 14 comprises a written information in form of the registration number of the vehicle. The vehicle registration plate 14 can be removed from or attached to the vehicle 1.

When the vehicle registration plate 14 is mechanically attached to the vehicle 1, the electrical connection at the interface 7 is provided at the same time. The vehicle registration plate 14 comprises a key unit that interacts with a power electronic circuitry of the electrical motor and activates the second operational mode. Thus, the second operational mode is only activated if the key unit and consequently the vehicle registration plate 14 are connected with the vehicle 1.

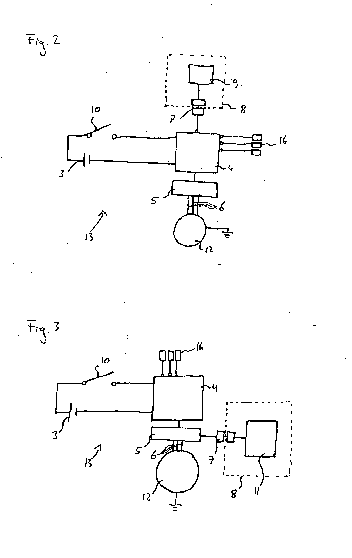

Figure 2 schematically shows a circuit diagram of a drive unit 13 according to a first embodiment. The drive unit 13 comprises an electrical motor 12, a power supply 3, which in this embodiment is provided as an accumulator, and an on-off-switch 10. A motor control device 4 and a power electronic circuitry 5 are connected via conductors 6 with motor windings of the electrical motors 12.

The motor control device 4 receives measurement values from a plurality of sensors 16, especially the vehicle speed, the number of pedal revolutions, the pushing force at the pedals as well as the current and the voltage of the control of the electrical motor 12.

The key unit 8 is mounted on the drive unit 13 via the interface 7. The key unit 8 which is indicated by the dotted line.

In a first embodiment, the key unit 8 comprises an EEPROM 9 with an integrated vehicle chassis number for unambiguously assigning the vehicle registration plate 14 with the vehicle 1. The EEPROM 9 is readable by the motor control device 4.

The power electronic circuitry 5 is works in a stand-alone-mode, that means without the key unit, only according to the official pedelec rules, that means in the first operational mode of the electromotor 12. The second operational mode has to be activated by the control device 4.

During operation, the drive unit 13 works as follows. The drive unit 13 is supplied with energy by operating the on-off-switch 10 at the start of the vehicle 1. The motor control device 4 checks if the key unit 8 and accordingly if the vehicle registration plate is connected to the vehicle reading the EEPROM 9. If this is not done successfully, for example when the vehicle registration plate 14 is removed, the electrical motor 12 is only operable in the first operational mode. The vehicle 1 is then operated as a pedelec, whereby the motor control device 4 controls the power of the electrical motor 12 depending on the power which is provided by the pushing of the rider.

If a vehicle registration plate 14 is mounted on the vehicle 1 and electrically connected with the vehicle 1 via the interface 7, the motor control device 4 checks the vehicle chassis number which is stored on the EEPROM 9 by reading the EEPROM 9 and compares the number with a value that is stored in the motor control device 4. If the assignment of the vehicle registration plate to the vehicle was successful, the motor control device 4 activates the required additional power for the second operational mode in the power electronic circuitry 5, such that the vehicle is operated as a moped with a nominal continuous power of 4 kW and with maximum speeds of up to 45 km/ h.

The motor control device 4 regularly reads the EEPROM 9 during the operation to control the presence of the vehicle registration plate. If the read out of the EEPROM 9 was not successful, the motor control device 4 cancels the activation of the second operational mode such that the vehicle is temporarily only operable as a pedelec in the firs operational mode.

Figure 3 shows a schematic circuit diagram of a drive unit according to a second embodiment. The second embodiment differs from the first one by the key unit 8 comprising a control device 11.

The power electronic circuitry 5 is designed such that it operates in a stand-alone mode according to the pedelec regulation, that means in the first operational mode of the electrical motor 12.

If the key unit 8 is electrically connected with the drive unit 13 via the interface 7, the control device 11 selects the operational mode and activates the additional power which is required for the second operational mode of the power electronic circuitry 5.

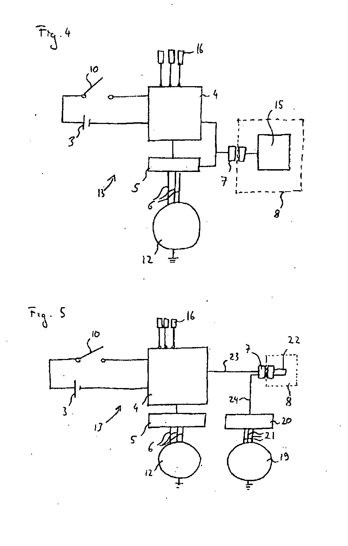

Figure 4 shows a schematic circuit diagram of a drive unit 13 according to a third embodiment. The third embodiment differs from the first and the second ones by the key unit 8 comprising a coding unit 15. In the third embodiment, the power electronic circuitry 5 provides in the stand-alone mode a vehicle according to the pedelec regulation, which means in the first operational mode of the electrical motor 12.

If the key unit 8 is connected to the drive unit 13 via the interface 7, the coding unit 15 receives control signals from the motor control device 4 as input signals and modifies them in a predetermined manner. Only then the additional power required for the second operational mode in the power electronic circuitry 5 is provided.

Figure 5 shows a schematic circuit diagram of a drive unit 13 according to a fourth embodiment. The fourth embodiment differs from the previous one by the provision of a second electrical motor 19 that is activated in the second operational mode of the drive unit 13.

The second electrical motor 19 is operable if the key unit 8 is electrically connected with the drive unit 13 via the interface 7. The key unit 8 comprises, in this embodiment, a bridge 22 that connects the conductor 23 from the motor control device 4 with a conductor 24 from the power electronic circuitry 12 of the second electrical motor 19.

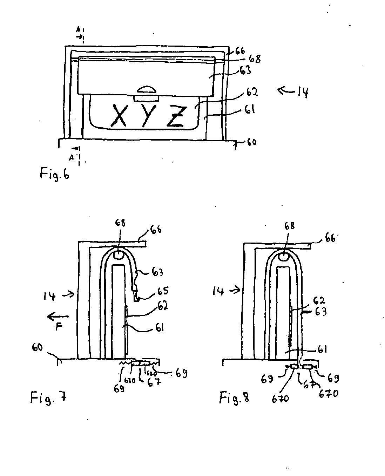

Figure 6 shows an embodiment of a vehicle registration plate 14. The vehicle registration plate 14 is mounted on a carrier 60 of a bicycle and it comprises a holding plate 61, a display plate 62, a hook 65, a hood 66 and a shutter 63. The display plate 62 comprises written information with a registration number and it is fixed to the holding plate 61. The shutter 63 is in a first, upper position, such that the display plate 62 is visible from an observer behind the vehicle.

Figure 7 shows a cross section of the vehicle registration plate 14 along the line A-A of Figure 6. The arrow F indicates the driving direction of the vehicle. The hood 66 has on opening to the back of the vehicle. The shutter 63 is fixed with its first end to the carrier 60 in the front of the holding plate 61. The second end of the shutter 63 comprises a electrically isolating hook 65. The vehicle registration plate comprises a pulley 68 running vertically above the holding plate 61. The shutter 63 lies on the pulley 68 such that one part of the shutter 63 is positioned behind the holding plate 61. Figure 7 shows the shutter 63 in the first position in which the hook 65 is above the display plate 62 such that the display plate 62 is visible.

The carrier 60 comprises a mechanical switch 67 having two rods 670 and two springs 69. The two rods 670 comprise electrical connectors. The springs 69 in their extended state are pressing the two rods 670 together, thereby providing an electrical contact. A first conductor, not shown in Figure 7, from the motor control device is connected to the first rod 670 and a second conductor, not shown in Figure 7, from the motor control device is connected to the second rod 670.

The motor control device measures that there is an electrical connection between the first conductor and the second conductor via the two rods 670. If this is the case, the vehicle is operated as an e-bike in the second operational mode.

Figure 8 shows the vehicle registration plate 14 of Figures 6 an 7 in a second position. In the second position, the shutter 63 is stretched such that the hook 65 is locked in the switch 67, thereby separating the two rods 670 and compressing the springs 69. As the hook 65 is electrically isolating, there is no electrical connection between the first conductor and the second conductor. This is detected by the motor control device and the vehicle is operated in the first operational mode as a pedelec.

Accordingly, if the display plate 62 is visible as in Figures 6 and 7, the vehicle operates in the second operational mode. If the display plate 62 is not visible as in Figure 8, the vehicle operates in the first operational mode.

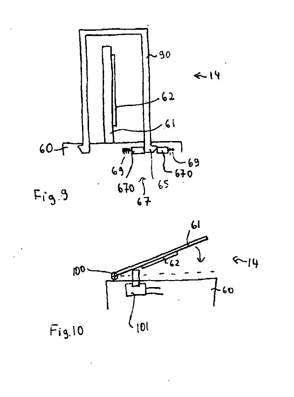

Figure 9 shows a further embodiment of a vehicle registration plate 14, which comprises a box 90, a holding plate 61 and a display plate 62. The carrier 60 comprises a switch 67 similar to the previous embodiment. Figure 9 shows the box 90 being mounted on a carrier 60 of the vehicle by fixing an electrically isolating hook 65 of the box 90 to the switch 67. The box 90 covers the holding plate 61 and the display plate 62 such that the display plate 62 it not visible by an observer. As the hook 65 is electrically isolating, the electrical connection between the two rods 670 is interrupted.

If the box 90 with its hook 65 is removed, not shown in Figure 9, the rods 670 are pressed together by the spring 69. The detection of the operational modes is done similar to the embodiment of Figures 6 to 8. Accordingly, if the display plate 62 is visible as in Figures 9, the vehicle operates in the second operational mode. If the display plate 62 is not visible, the vehicle operates in the first operational mode.

Figure 10 shows a further embodiment of a vehicle registration plate 14. The vehicle registration plate 14 comprises a holding plate 61 and a display plate 62. The carrier 60, comprises an on-off-switch 101. The display plate 62 is fixed to the holding plate 61 and the holding plate 61 is pivot-mounted on a shaft 100 which is located at the carrier 60. The holding plate 61 may be put in a vertical position in which the display plate 62 is visible. In this position, the on-off-switch is on. If the holding plate 61 is hinged down to a horizontal position, the on-off-switch 101 is switched off.

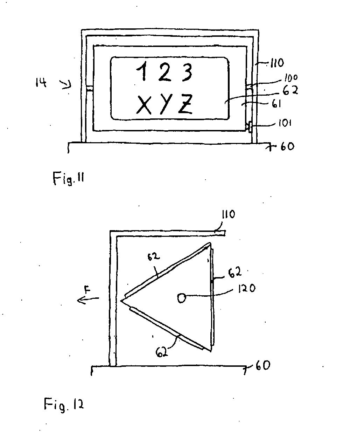

Figure 11 shows a further embodiment of a vehicle registration plate 14. The vehicle registration plate 14 comprises a holding plate 61 and a display plate 62. The display plate 62 is fixed to the holding plate 61 and the holding plate 61 is pivot-mounted on a shaft 100, which is located at the middle of the holding plate 61. The holding plate 61 may be put in a vertical position in which the display plate 62 is visible. In this position, the on-off-switch 101 is on. If the holding plate is turned to a horizontal position, the on-off-switch 101 is switched off.

Figure 12 shows a further embodiment of a vehicle registration plate 14 in a top view. The vehicle registration plate 14 is pivot-mounted at a vertical shaft 120. A box 100 comprising the vehicle registration plate 14 has front and sideward ceilings such that the vehicle registration plate 14 is only visible from the back of the vehicle. The vehicle registration plate 14 has a form of a triangle. On each side of the triangle, there is provided one display plate 62. Only the display plate 62 which is turned to the back is visible from an observer outside the vehicle 1. The vehicle registration plate 14 can be turned around the shaft 120 to display further display plates 62.

The display plates 62 differ from each other by its written information. Each of one the three display plates 62 provides a different maximum speed for the vehicle 1. Turning the vehicle registration plate 14 activates switches, not shown, which in turn activate one of three operational modes. The operational modes limit the speed of the vehicle to the currently displayed maximum speed.

## Claims

1. Vehicle (1) with a drive unit (13) having at least one electrical motor (12), the vehicle being a two-wheeler, a three-wheeler or a four wheeler,
whereby the drive unit (13) comprises at least two different operational modes,
the vehicle (1) being adapted for connection to a tag, the tag comprising a registration plate (14) and a key unit (8),
whereby an operation parameter of the drive unit (13) is limited to a first target area in a first operational mode and to a second target area in a second operational mode,
the drive unit (13) comprising a motor control device (4), the motor control device (4) being operable to activate the second operational mode by reading electronic information from the key unit (8) if the registration plate (14) is mechanically attached to the vehicle (1) and the motor control device (4) being operable to deactivate the second operational mode if the registration plate (14) is not mechanically attached to the vehicle (1).

2. Vehicle according to claim 1,
whereby the key unit (8) comprises a chip being readable by the motor control device (4).

3. Vehicle (1) according to claim 1,
whereby the key unit (8) comprises a coding unit (15).

4. Vehicle (1) according to one of the claims 1 to 4 3,
whereby the nominal continuous power of the drive unit (13) is restricted to a first maximum value in the first operational mode and is restricted to a second maximum value in the second operational mode, whereby the second maximal value is larger than the first maximum value.

5. Vehicle (1) according to one of the claims 1 to 3,
whereby the speed of the vehicle (1) is restricted to a first maximum value in the first operational mode and is restricted to a second maximum value in the second operational mode, whereby the second maximum value is larger than the first maximum value.

6. Vehicle (1) according to one of the claims 1 to 5,
whereby the drive unit (13) comprises at least two electrical motors (12, 19), of which only the first electrical motor (12) is operable in the first operational mode,
whereby in the second operational mode the second electrical motor (19) is operable in stand-alone mode or both the first electrical motor (12) and the second electrical motor (19) are operable.

7. Vehicle according to one of the claims 1 to 6,
whereby the vehicle (1) is constructed as a two-wheeler.

8. Vehicle registration plate (14) with a key unit (8) and a contact for an electrical connection to a vehicle (1), the vehicle registration plate (14) being adapted to be connected to the vehicle (1) of claim 1, wherein the vehicle (1) is operable in the second operation mode when the registration plate (14) is mechanically attached to the vehicle.

9. Vehicle registration plate (14) according to claim 8,
whereby the key unit (8) is constructed as electronic key unit (8) that interacts with the motor control device (4) of the vehicle (1) to activate an operational mode of the drive of the vehicle (1).

10. Vehicle registration plate according to claim 9,
whereby the key unit (8) comprises a chip being readable by the motor control device (4) of the vehicle (1).

11. Vehicle registration plate according to claim 9,
whereby the key unit (8) comprises a further control device (11) activating an operational mode of the electrical motor (12) of the vehicle.

12. Vehicle registration plate (14) according to claim 9,
whereby the key unit (8) comprises a coding unit (15).

13. Vehicle registration plate (14) according to claim 8 or 9, whereby the key unit (8) comprises a bridge (22) that provides an electrical contact between a conductor from the motor control device (4) of the vehicle (1) and a conductor to a power electronic circuitry (5) of the electrical motor (12) of the vehicle (1).

14. Method for operating the vehicle (1) of one of the claims 1 to 7, the method comprising
- mechanically attaching the vehicle plate (14) to the vehicle (1) for operating the vehicle (1) in the second operational mode,
- reading electronic data from the key unit (8), and thereby activating the second operational mode.

## Patentansprüche

1. Fahrzeug (1) mit einer Antriebseinheit (13), die wenigstens einen Elektromotor (12) aufweist, wobei das Fahrzeug ein Zweirad-, Dreirad- oder Vierradfahrzeug ist, wobei die Antriebseinheit (13) wenigstens zwei verschiedene Betriebszustände aufweist,
das Fahrzeug (1) zur Verbindung mit einem Etikett angepasst ist, wobei das Etikett ein Kennzeichen (14) und eine Schlüsseleinheit (8) aufweist,
wobei ein Betriebsparameter der Antriebseinheit (13) in einem ersten Betriebsmodus (14) auf einen ersten Zielbereich beschränkt ist und in einem zweiten Betriebsmodus auf einen zweiten Zielbereich beschränkt ist, wobei
die Antriebseinheit (13) ein Motorsteuerungsgerät (4) aufweist, wobei das Motorsteuerungsgerät (4) dazu eingerichtet ist, den zweiten Betriebsmodus durch Auslesen von elektronischer Information aus der Schlüsseleinheit (8) zu aktivieren, wenn das Kennzeichen (14) mechanisch mit dem Fahrzeug (1) verbunden ist, und wobei das Motorsteuerungsgerät (4) dazu eingerichtet ist, den zweiten Betriebsmodus zu deaktivieren, wenn das Kennzeichen (14) nicht mit dem Fahrzeug (1) mechanisch verbunden ist.

2. Fahrzeug (1) gemäß Anspruch 1,
wobei die Schlüsseleinheit (8) einen Chip aufweist, der durch das Motorsteuerungsgerät (4) auslesbar ist.

3. Fahrzeug (1) gemäß Anspruch 1, wobei die Schlüsseleinheit (8) eine Kodiereinheit (15) aufweist.

4. Fahrzeug (1) gemäß einem der Ansprüche 1 bis 3,
wobei die nominelle kontinuierliche Antriebsleistung der Antriebseinheit (13) in dem ersten Betriebsmodus auf einen ersten Maximalwert beschränkt ist und in dem zweiten Betriebsmodus auf einen zweiten Maximalwert beschränkt ist, wobei der zweite Maximalwert größer als der erste Maximalwert ist.

5. Fahrzeug (1) gemäß einem der Ansprüche 1 bis 3,
wobei die Geschwindigkeit des Fahrzeugs (1) in dem ersten Betriebsmodus auf einen ersten Maximalwert beschränkt ist und in dem zweiten Betriebsmodus auf einen zweiten Maximalwert beschränkt ist, wobei der zweite Maximalwert größer als der erste Maximalwert ist.

6. Fahrzeug (1) gemäß einem der Ansprüche 1 bis 5,
wobei die Antriebseinheit (13) mindestens zwei Elektromotoren (12, 19) aufweist, von denen im ersten Betriebsmodus nur der erste Motor (12) betreibbar ist, wobei im zweiten Betriebsmodus der zweite Motor (19) in einem Einzelbetriebsmodus betreibbar ist oder sowohl der erste Motor (12) als auch der zweite Motor (19) betreibbar sind.

7. Fahrzeug gemäß einem der Ansprüche 1 bis 6, wobei das Fahrzeug als ein Zweiradfahrzeug ausgebildet ist.

8. Fahrzeugkennzeichen (14) mit einer Schlüsseleinheit (8) und einem Kontakt für eine elektrische Verbindung mit einem Fahrzeug (1),
wobei das Fahrzeugkennzeichen (14) an eine Verbindung mit dem Fahrzeug (1) des Anspruchs 1 angepasst ist, wobei das Fahrzeug (1) in dem zweiten Betriebsmodus betreibbar ist, wenn das Kennzeichen (14) mechanisch mit dem Fahrzeug verbunden ist.

9. Fahrzeugkennzeichen (14) gemäß Anspruch 8, wobei die Schlüsseleinheit (8) als eine elektronische Schlüsseleinheit (8) ausgebildet ist, die mit der Motorsteuerungseinheit (4) des Fahrzeugs (1) wechselwirkt, um einen Betriebsmodus des Antriebs des Fahrzeugs (1) zu aktivieren.

10. Fahrzeugkennzeichen (14) gemäß Anspruch 9,
wobei die Schlüsseleinheit (8) einen Chip aufweist, der durch die Motorsteuerungseinheit (4) des Fahrzeugs (1) auslesbar ist.

11. Fahrzeugkennzeichen (14) gemäß Anspruch 9,
wobei die Schlüsseleinheit (8) eine weitere Motorsteuerungseinheit (11) aufweist, die einen Betriebsmodus des Elektromotors (12) des Fahrzeugs aktiviert.

12. Fahrzeugkennzeichen (14) gemäß Anspruch 9,
wobei die Schlüsseleinheit (8) eine Kodiereinheit (15) aufweist.

13. Fahrzeugkennzeichen (14) gemäß Anspruch 8 oder 9,
wobei die Schlüsseleinheit (8) eine Brücke (22) aufweist, die einen elektrischen Kontakt zwischen einer Leitung von der Motorsteuerungseinheit (4) des Fahrzeugs (1) und einer Leitung zu einem leistungselektronischen Schaltkreis (5) des Elektromotors (12) des Fahrzeugs (1) bereitstellt.

14. Verfahren zum Betreiben des Fahrzeugs (1) gemäß einem der Ansprüche 1 bis 7, das aufweist:
- mechanisches Verbinden des Fahrzeugkennzeichens (14) mit dem Fahrzeug (1) zum Betreiben des Fahrzeugs (1) in dem zweiten Betriebsmodus,
- Auslesen von elektronischen Daten aus der Schlüsseleinheit (8), und dadurch Aktivieren des zweiten Betriebsmodus.

## Revendications

1. Véhicule (1) avec une unité d'entraînement (13) comprenant au moins un moteur électrique (12), le véhicule étant un deux-roues, un trois-roues ou un quatre-roues,
dans lequel l'unité d'entraînement (13) comprend au moins deux différents modes d'opération,
le véhicule (1) étant adapté pour une connexion avec une étiquette, l'étiquette comprenant une plaque d'immatriculation (14) et une unité de clé (8),
dans lequel un paramètre d'opération de l'unité d'entraînement (13) est limité à un premier domaine cible dans un premier mode d'opération et limité à un second domaine cible dans un second mode d'opération,
l'unité d'entraînement (13) comprenant un dispositif de commande de moteur (4), le dispositif de commande de moteur (4) étant fonctionnel pour activer le deuxième mode d'opération par lire d'information électronique de l'unité de clé (8), si la plaque d'immatriculation (14) est fixée mécaniquement au véhicule (1) et le dispositif de commande de moteur (4) étant opérable pour désactiver le second mode d'opération si la plaque d'immatriculation (14) n'est pas fixé mécaniquement au véhicule (1).

2. Véhicule selon revendication 1,
dans lequel l'unité de clé (8) comprend une puce, la puce étant lisible par le dispositif de commande de moteur (4).

3. Véhicule selon revendication 1,
dans lequel l'unité de clé (8) comprend une unité de codage (15).

4. Véhicule (1) selon une des revendications 1 à 3,
dans lequel la puissance nominale de l'unité d'entraînement (13) est limitée à une première valeur maximale dans le premier mode d'opération est limitée à une seconde valeur maximale dans le second mode d'opération, la seconde valeur maximale étant plus grande que la première valeur maximale.

5. Véhicule (1) selon une des revendications 1 à 3,
dans lequel une vélocité du véhicule (1) est limitée à une première valeur maximale dans le premier mode d'opération et est limitée à une seconde valeur maximale dans le second mode d'opération, la seconde valeur maximale étant plus grande que la première valeur maximale.

6. Véhicule (1) selon une des revendications 1 à 5,
dans lequel l'unité d'entraînement (13) comprend au moins deux moteurs électriques (12, 19), dans lequel seulement le premier moteur électrique (12) est opérationnel dans le premier mode,
et dans lequel, dans le deuxième mode d'opération, seulement le second moteur électrique (19) est opérationnel dans un mode autonome, ou le premier moteur électrique (12) et le second moteur électrique (19) sont tous opérationnels.

7. Véhicule selon une des revendications 1 à 6,
dans lequel le véhicule (1) est construit comme un deux-roues.

8. Plaque d'immatriculation (14) pour un véhicule avec une unité de clé (8) et un contact pour une connexion électrique au véhicule (1),
la plaque d'immatriculation (14) étant adaptée pour être connectée au véhicule (1) de la revendication 1, dans laquelle le véhicule est opérable dans le second mode d'opération quand la plaque d'immatriculation (14) est fixée mécaniquement au véhicule.

9. Plaque d'immatriculation (14) selon revendication 8, dans laquelle l'unité de clé (8) est construite comme une unité de clé électronique (8) qui interagit avec le dispositif de commande de moteur (4) du véhicule (1) pour activer un mode d'opération de l'entraînement du véhicule (1).

10. Plaque d'immatriculation (14) selon revendication 9, dans laquelle l'unité de clé (8) comprend une puce, la puce étant lisible par le dispositif de commande de moteur (4) du véhicule.

11. Plaque d'immatriculation (14) selon revendication 9, dans laquelle l'unité de clé (8) comprend un autre dispositif de commande (11), le dispositif activant une mode d'opération du moteur électrique (12) du véhicule.

12. Plaque d'immatriculation (14) selon revendication 9, dans laquelle l'unité de clé comprend une unité de code (15).

13. Plaque d'immatriculation (14) selon revendication 8 ou 9, dans laquelle l'unité de clé (8) comprend un pont (22) qui fournit un contact électrique entre un conducteur du dispositif de commande de moteur (4) du véhicule et un conducteur à un circuit électronique de puissance (5) du moteur électrique (12) du véhicule.

14. Procédé pour opérer un véhicule (1) selon une des revendications 1 à 7, le procédé comprenant
- fixer mécaniquement la plaque d'immatriculation (14) au véhicule (1) pour opérer le véhicule (1) dans le second mode d'opération,
- lire des données électroniques de l'unité de clé (8) et, par conséquent, activer le second mode d'opération.
